# EUROPEAN PATENT APPLICATION

(11) **EP 4 782 984 A1**
(43) Date of publication of application: **29.07.2026**
(21) Application number: 26152558.8
(22) Date of filing: 19.01.2026
(51) Int. Cl.: G06F 3/12

(54) **INFORMATION PROCESSING APPARATUS, METHOD AND PROGRAM**

(30) Priority: 24.01.2025 JP 2025010636
(71) Applicant: Canon Kabushiki Kaisha, Tokyo, 146-8501 (JP)
(72) Inventor: NAKAGAWA, Masashi, Tokyo (JP)
(74) Representative: WESER & Kollegen Patentanwälte PartmbB

(57) **Abstract**

An information processing apparatus is connected over a communication network to a printer and a cloud printing service holding a print job received. The information processing apparatus obtains, from the cloud printing service, first device identification information for linking with the cloud printing service; and installs a program that transmits, to the cloud printing service, a print job output by a printer driver corresponding to the printer, based on the first device identification information.

## Description

### TECHNICAL FIELD

The present disclosure relates to a mechanism for implementing a printing system in cooperation with a cloud printing service, and relates particularly to an information processing apparatus and method, and a program.

### BACKGROUND

General-purpose printer drivers (local printer drivers) that communicate directly with image forming apparatuses using industry-standard protocols such as the Internet Printing Protocol (IPP) have been under consideration in recent years. A local printer driver can communicate with printers from multiple printer vendors. Accordingly, by using a local printer driver, a user can transmit a print job to an image forming apparatus without installing a vendor-specific printer driver.

Printing using a cloud printing service has also been under consideration. In a cloud printing service, a printer driver for the cloud printing service (a cloud printer driver) is installed in an information processing apparatus. In the cloud printing service, printing is executed by the information processing apparatus transmitting a print job to the cloud printing service using the cloud printer driver, and the cloud printing service then transmitting the print job to an image forming apparatus.

Printing using a cloud printer driver makes it possible to output printed materials with a high degree of freedom. For example, a company A tenant of a cloud printing service used by the company A registers an employee working for the company A as a user, and registers an image forming apparatus of the company A for use. Through this, by executing printing from a terminal in the company, a registered user of company A can print freely from any registered image forming apparatus owned by the company A.

Because the local printer driver described above handles print jobs printed by image forming apparatuses from a variety of vendors, there are restrictions on the items, functions, and the like that can be set in print settings. Accordingly, it is conceivable to install an extension application using identification information of a printer and extend a print queue associated with the printer driver, as disclosed in Japanese Patent Laid-Open No. 2021-124791. Doing so makes it possible to implement a user interface (UI), a print job editing function, and the like for vendor-specific print settings.

Additionally, when a printer driver receives a printing instruction, a print job is transmitted to a standby port of a print server created in advance, as disclosed in Japanese Patent Laid-Open No. 2016-118983. The print server monitors the standby port, and when the transmission of the print job by the printer driver is complete, the print job is transferred from the standby port to the print server. This makes it possible to transfer the print job from the local printer driver to the print server.

### SUMMARY

Here, the cloud printing service may provide functions such as controlling the print settings that can be used, limiting the number of sheets that can be printed within a set period of time, and the like according to the user executing the print. Each of setting values prepared for performing at least one such function is managed by the tenant of the cloud printing service. Here, it is difficult for a local printer driver to implement various types of control for the functions provided by a cloud printing service based on setting values managed by the cloud printing service.

Meanwhile, current operating systems do not provide a mechanism for installing and using extension applications for cloud printing services. This is because the extension application is a mechanism installed in the operating system in association with model identification information including a hardware ID (HWID) obtained from a printer. Currently, no mechanism has been provided which enables the obtainment of information corresponding to the model identification information of a cloud printing service from the cloud printing service.

Furthermore, in Japanese Patent Laid-Open No. 2016-118983, it is necessary for the user to separately install a special application that serves as a virtual printer in a client terminal, which is very troublesome.

Accordingly, a technique of the present disclosure provides a printing system that, even when printing using a local printer driver, enables a print job to be uploaded to a cloud printing service, and creates a print job suited to a vendor-specific cloud printing service.

The present disclosure in its first aspect provides an information processing apparatus as specified in claim 1. Optional features are specified in claim 2 to 8.

The present disclosure in its second aspect provides a program as specified in claim 9.

The present disclosure in its third aspect provides an information processing method as specified in claim 10.

According to the present disclosure, a print job can be uploaded to a cloud printing service even when printing using a local printer driver. Furthermore, a print job suited to a vendor-specific cloud printing service can be created.

This makes it possible to output a printed material suited to the cloud printing service from any multifunction peripheral registered with the cloud printing service.

Features of the present disclosure will become apparent from the following description of embodiments with reference to the attached drawings. The following description of embodiments is described by way of example.

### BRIEF DESCRIPTION OF THE DRAWINGS

The accompanying drawings, which are incorporated in and constitute a part of the specification, illustrate embodiments of the present disclosure, and together with the description, serve to explain the principles of the embodiments.
Fig. 1 is a schematic diagram illustrating a network configuration according to a first embodiment.
Fig. 2A is a block diagram illustrating the hardware configuration of a client terminal according to the first embodiment.
Fig. 2B is a block diagram illustrating the hardware configuration of a cloud printing system according to the first embodiment.
Fig. 2C is a block diagram illustrating the hardware configuration of a printer according to the first embodiment.
Fig. 3 is a block diagram illustrating an example of a hardware configuration according to the first embodiment.
Fig. 4A is a sequence chart illustrating a procedure for installing a local printer driver and a print settings extension app according to the first embodiment.
Fig. 4B is a sequence chart illustrating a procedure for installing a local printer driver and a print settings extension app according to the first embodiment.
Fig. 5 is a diagram illustrating an example of a printer addition wizard start window according to the first embodiment.
Fig. 6 is a diagram illustrating options for device types in the window illustrated in Fig. 5, according to the first embodiment.
Fig. 7 is a diagram illustrating an example of a window for adding a printer according to the first embodiment.
Fig. 8 is a sequence chart illustrating a procedure for uploading print data to a cloud printing server according to a first embodiment.
Fig. 9 is a sequence chart illustrating a procedure for outputting print data from a cloud-compatible printer according to the first embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

### First Embodiment

A first embodiment will describe a method for installing a dedicated print settings extension app for a cloud printing service in a local printer driver.

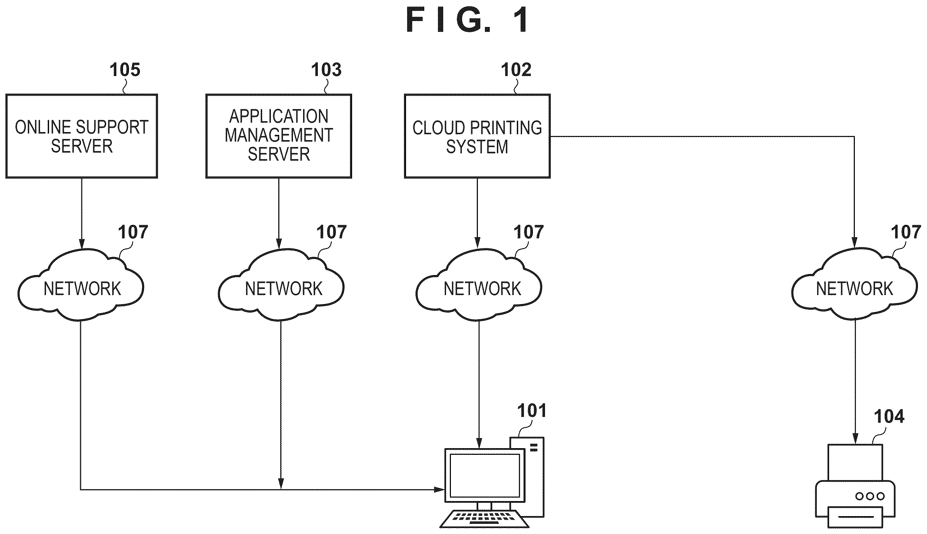

Fig. 1 is a schematic diagram illustrating a printing system according to the present embodiment. A client terminal 101 and a printer 104 are both connected by a cloud printing system 102 and a network 107. Furthermore, the client terminal 101 is connected to an application management server 103 and an online support server 105 over the network 107.

The printer 104 has a function for operating cooperatively with the cloud printing system 102, and is a printer that supports a printing service provided by the cloud printing system 102. The cloud printing system 102 is a server apparatus for providing a cloud printing service. This server apparatus may be called a "cloud printing server", and the "cloud printing service" may be referred to as including the hardware that provides the cloud printing service, namely, the cloud printing server.

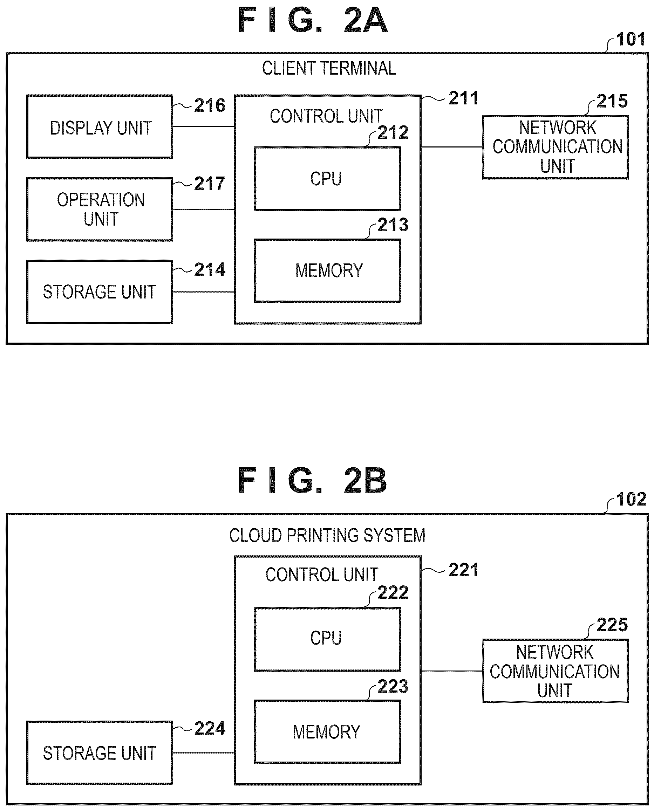

The hardware configuration of the system according to the present embodiment will be described next with reference to Figs. 2A to 2C.

Fig. 2A is a block diagram illustrating the hardware configuration example of the client terminal 101. The client terminal 101 is also called a "terminal apparatus" or an "information processing apparatus".

The client terminal 101 includes a display unit 216, an operation unit 217, a storage unit 214, a control unit 211, and a network communication unit 215.

The storage unit 214 is a non-volatile storage device such as a hard disk, an SSD, or the like, and is capable of storing and rewriting digital data.

The control unit 211 includes a CPU 212 and a memory 213, and controls the operations of the client terminal 101 as a whole. The CPU 212 loads programs stored in the storage unit 214 into the memory 213 and executes the programs. The memory 213 is a main storage memory of the CPU 212, and is used as a work area or a temporary storage region for loading various types of programs.

The network communication unit 215 is a device that communicates with an external network (a communication network), and inputs, outputs, or transmits digital data with a server, a client terminal, or the like.

The display unit 216 is a device for displaying visual information to a user in real time, such as a liquid crystal display. The operation unit 217 is a device for accepting inputs from a user via a keyboard, a mouse, or the like. A device that includes the functions of both the display unit 216 and the operation unit 217, such as a touch panel, may be used instead.

The application management server 103 and the online support server 105 may also be implemented with a hardware configuration similar to that of the client terminal 101. However, the application management server 103 and the online support server 105 need not include the display unit 216 and the operation unit 217.

Fig. 2B is a block diagram illustrating the hardware configuration of the cloud printing system 102. The cloud printing system 102 includes a storage unit 224, a control unit 221, and a network communication unit 225. The functions and control of the cloud printing system 102 are provided by a CPU 222 executing programs loaded into a memory 223.

The storage unit 224, the control unit 221, and the network communication unit 225 are equivalent to those of the client terminal 101, and will therefore not be described here.

Although the cloud printing system 102 will be described as being constituted by a single information processing apparatus having the hardware configuration illustrated in Fig. 2B, the cloud printing system 102 may be constituted by a plurality of the information processing apparatuses illustrated in Fig. 2B.

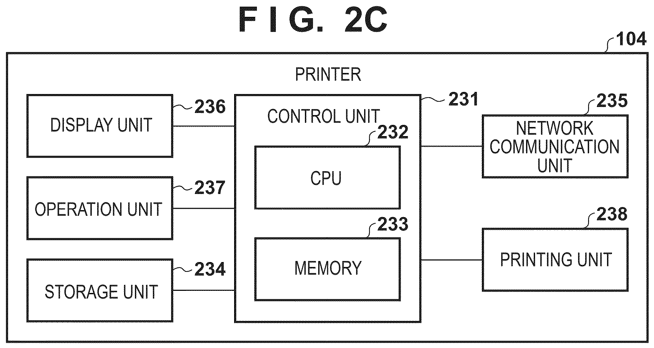

Fig. 2C is a block diagram illustrating the hardware configuration of the printer 104. The printer 104 includes a display unit 236, an operation unit 237, a storage unit 234, a control unit 231, a network communication unit 235, and a printing unit 238. The functions of the printer 104 are provided by a CPU 232 executing programs loaded into a memory 233.

The display unit 236 is a device for displaying information to a user in real time, such as a touch panel or an LED provided in the printer 104.

The operation unit 237 is a device for accepting input from a user, and may include physical keys such as a numerical keypad in addition to a touch panel. The storage unit 234 and the control unit 231 are equivalent to those of the client terminal 101, and will therefore not be described here.

The network communication unit 235 is a device that communicates with an external network, and is mainly responsible for receiving print data, transmitting notifications of the state of the printer 104, such as errors, to an external server, and the like.

The printing unit 238 is a device that performs printing processing by performing a series of operations of feeding, printing, and discharging sheets prepared in a cassette or a tray. The printing method is not particularly limited, and may be an electrophotographic method, an ink jet method, or the like. The printing unit 238 also includes a double-sided unit used when discharging sheets, a finishing device that performs stapling or punching processing, and the like.

Although a single-function printer that only performs a printing function is described as an example of the printer 104 in the present embodiment, a multifunction printer (a multifunction peripheral) which also includes a scanner function, a fax function, and the like may be used instead.

### Software Module Configuration

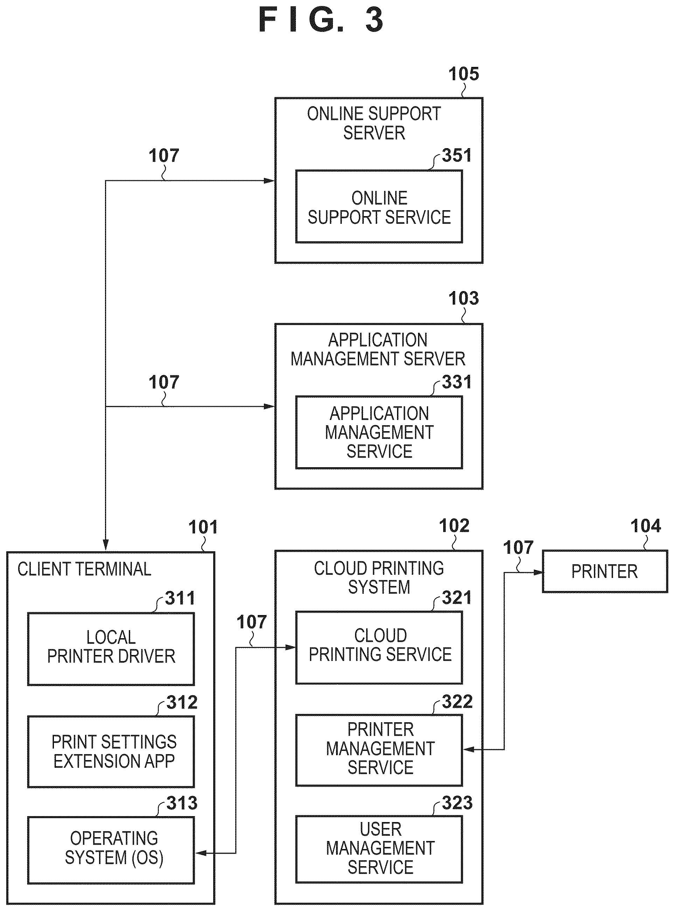

A schematic diagram of modules in the printing system for cloud printing according to the present embodiment will be described next with reference to Fig. 3. The client terminal 101 is connected to the cloud printing system 102, the application management server 103, and the online support server 105 over the network 107. The printer 104 is connected to the cloud printing system 102 over the network 107.

Although one each of the client terminal 101 and the printer 104 are illustrated in Fig. 3, a plurality of each of the client terminal 101 and the printer 104 may be provided.

Additionally, the cloud printing system 102, the application management server 103, and the online support server 105 may be server systems constituted by a plurality of information processing apparatuses. Implementing each server as a server system constituted by a plurality of information processing apparatuses makes it possible to distribute the load among the plurality of information processing apparatuses.

The cloud printing system 102, the application management server 103, and the online support server 105 may also be implemented virtually within a single physical information processing apparatus.

The network 107 is assumed to be a wide-area network (WAN), such as the Internet, that connects the client terminal 101 and the printer 104 to a server. However, the network 107 may be a closed network environment such as a company LAN or the like.

The client terminal 101 is an information processing apparatus such as a PC, a tablet, a smartphone, or the like, and is a terminal that is directly operated by a user. Any desired application software can be run on an operating system 313 of the client terminal 101. Programs such as a local printer driver 311 and a print settings extension app 312 run on the operating system 313. Hereinafter, the operating system 313 will be abbreviated as "OS 313".

To describe again here, in the present embodiment, the local printer driver is a printer driver that directly communicates with an image forming apparatus (a printer) using an industry-standard protocol such as IPP. The local printer driver may be a general-purpose printer driver compliant with printers from various printer vendors included as standard in and operating system such as Windows (registered trademark), for example. The local printer driver 311 may also be included in the OS 313 as a program that provides some of the functions of the OS 313. The print settings extension app 312 extends the functions of the OS 313, and may therefore also be called an "extension application".

The printer 104 is a device that actually prints on a recording medium such as paper, and is an image forming apparatus that converts print data received over the network 107 into image data and prints the data.

The printer 104 is capable of receiving print data from the client terminal 101 via the cloud printing system 102, or receiving print data directly from the client terminal 101 without going through the cloud printing system 102. However, the present embodiment will describe a case where the printer 104 receives the print data via the cloud printing system 102.

The printer 104 receives, over the network 107, print data which has been generated by the local printer driver 311 of the client terminal 101 and transferred to the cloud printing system 102 via the print settings extension app 312 and the OS 313. Note that the print data and print job data both include data representing objects such as images, text, and the like to be printed, and no particular distinction is made therebetween in the present embodiment.

The cloud printing system 102 accepts a print instruction and print data from an external source. Furthermore, the cloud printing system 102 transmits the received print data to a predetermined printer 104. The predetermined printer 104 may be a printer registered in the cloud printing system 102. The cloud printing system 102 may also hold the received print data and then transmit the held print data to the printer 104 in response to a request. A cloud printing service 321 is present in the cloud printing system 102. Note that the cloud printing service may be abbreviated as "CPS".

When printing using the local printer driver 311, the cloud printing system 102 uses the network 107 to receive the print job data, via the print settings extension app 312 and the OS 313. A printer management service 322 registers the printer 104. Furthermore, a user management service 323 manages the print job data transmitted by different users, and associates the print job data with a cloud printing-compatible printer with which the user can print.

The application management server 103 holds and manages various types of applications. The application management server 103 receives application identification information and a download request from the client terminal 101, and transmits an application identified based on the received identification information to the client terminal 101. An application management service 331 on the application management server 103 delivers applications to the client terminal 101. The print settings extension app 312 is one of the applications delivered to the client terminal 101.

The online support server 105 is a server apparatus that provides an online support service 351. The online support service 351 is a service for providing the client terminal 101 with a file containing information for extending the functions of the client terminal 101. Procedure for Installing Print Settings Extension App

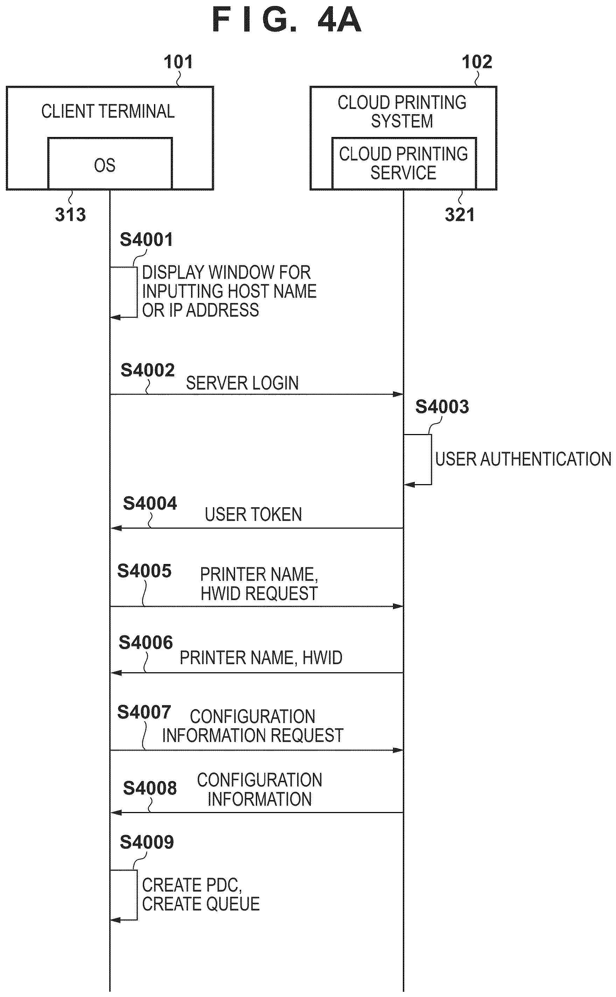

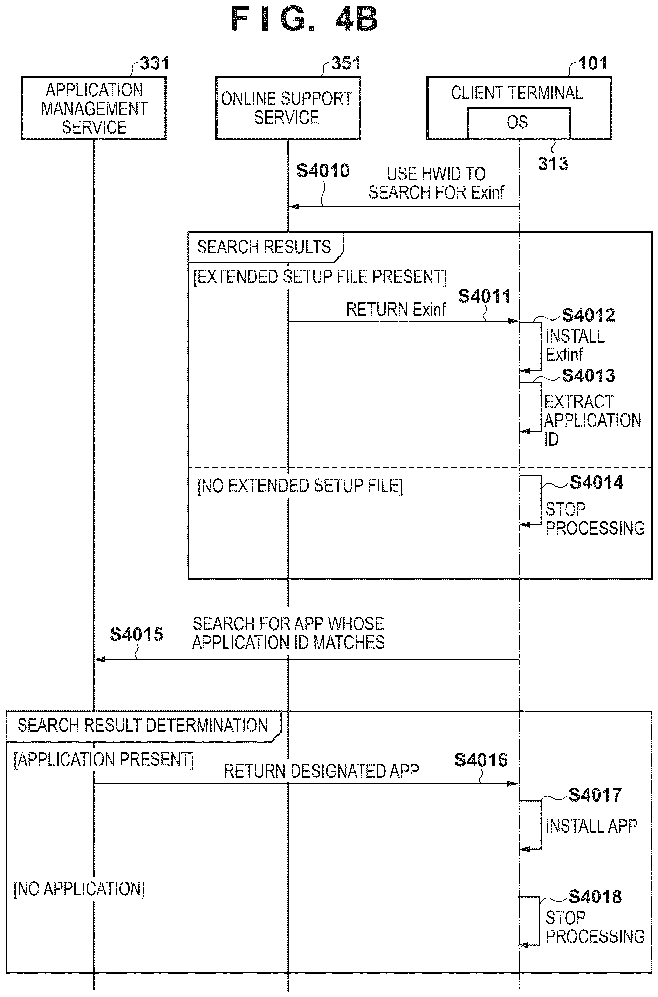

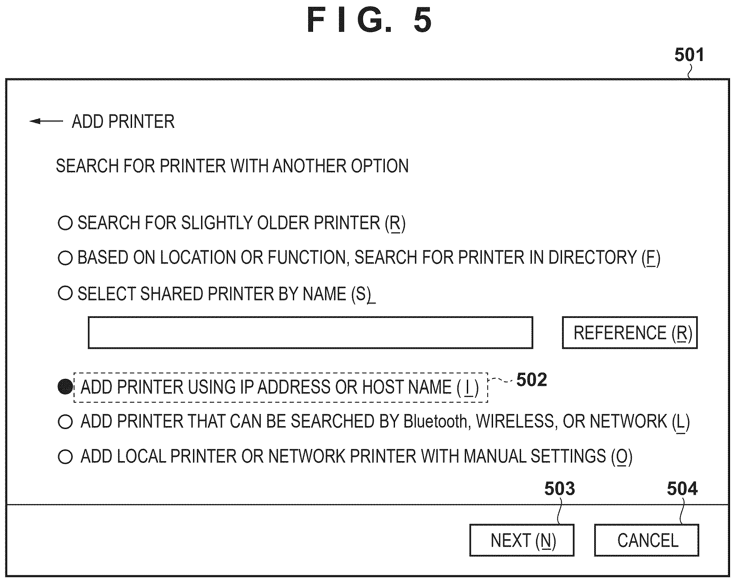

An example of a procedure for installing the local printer driver and the print settings extension app, as well as a sequence performed between each item of software and the printing service, according to the present embodiment, will be described next with reference to Figs. 4A and 4B. Unless otherwise specified, the OS 313 performs this procedure. The processing is started when the user selects an "Add a printer using an IP address or host name" method in a wizard for adding a printer manually. The printer addition wizard window will be described with reference to Fig. 5. In Figs. 4A and 4B, with respect to the printer 104, the processing is performed by the CPU 232, whereas with respect to the cloud printing service 321, the processing is performed by the CPU 222 of the cloud printing system 102. For the client terminal 101, the processing is indicated as being performed by the OS 313, but the entity executing the processing is the CPU 212. The application management service 331 and the online support service 351 are implemented by the CPUs of the application management server 103 and the online support server 105, respectively, executing programs. In other words, those CPUs execute the procedures illustrated here.

The processing illustrated in Fig. 4A is started in response to the user selecting an "Add a printer using an IP address or host name" method 502 and pressing a "Next" button 503 in a printer addition wizard window 501.

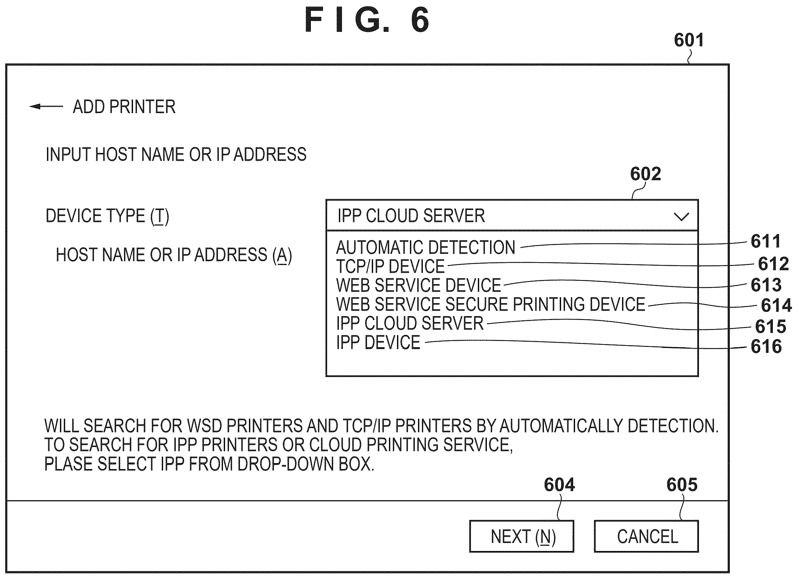

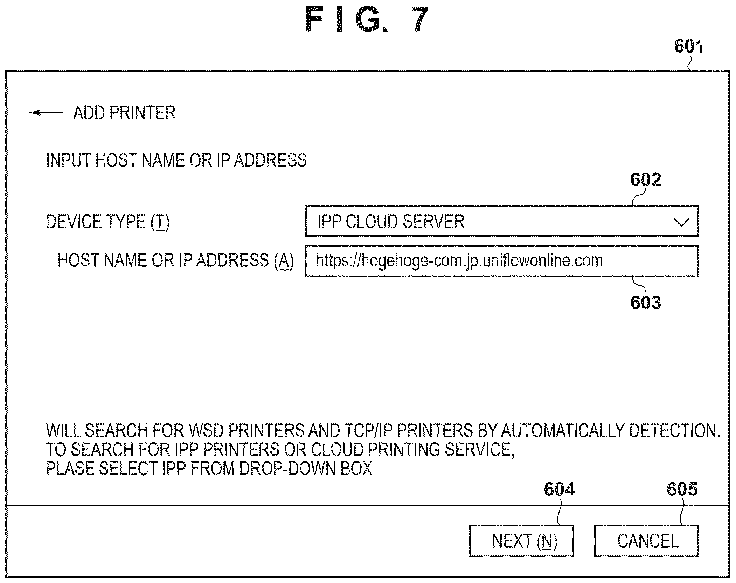

In step S4001, the OS 313 displays a window 601 for inputting a host name or IP address, such as that illustrated in Fig. 6, on the display unit 216. A device type 602 and a host name or IP address 603 can be input in the host name or IP address input window 601. When the device type 602 is selected, a pull-down menu is displayed. In the present embodiment, as illustrated in Fig. 6, detect automatically 611, TCP/IP device 612, web service device 613, web service secure printing device 614, IPP cloud server 615, and IPP device 616 are provided as options. Furthermore, the present embodiment assumes that the user selects and executes IPP cloud server 615 from among these options. When IPP cloud server 615 is selected, the host name or IP address 603 corresponding to an IPP cloud server can be input, as illustrated in Fig. 7. The host name or IP address input here may be the URL of the cloud printing service 321, for example.

When IPP cloud server 615 is selected as the device type 602 and a "Next" button 604 is pressed, in step S4002, the OS 313 attempts to log in to the cloud printing system 102 using the URL input in the host name or IP address 603.

In step S4003, the cloud printing system 102 performs user authentication, and when the authentication is successful, in step S4004, the cloud printing system 102 returns a user token to the client terminal 101. The client terminal 101 can access the cloud printing system 102 using the user token, but the user token will not be described in the following. If the user authentication has failed in step S4003, a response indicating the failure is returned. In this case, the login may be retried from the client terminal 101.

In step S4005, the OS 313 that has received the user token requests a linking hardware ID (HWID) from the cloud printing server 102, for installing a printer driver extension app for linking with the cloud printing service. Here, the printer driver extension app is the print settings extension app 312.

In step S4006, the cloud printing system 102 that received the request regards itself as a virtual printer, and returns the linking HWID to the OS 313 of the client terminal 101 as device identification information of the virtual printer. This linking HWID is also called "cloud printing service linking device identification information" or "linking device identification information". In step S4007, the OS 313 that has received the linking HWID requests configuration information for configuring the local printer driver 311 from the cloud printing system 102. In step S4008, the cloud printing system 102 that received the request regards itself as a virtual printer in the same manner as in step S4006, and returns configuration information (also called "capability information") of the virtual printer. The configuration information of the virtual printer may be stored in the cloud printing system 102 in advance, for example. In other words, the cloud printing system 102 that received the request for the configuration information may transmit configuration information that has been prepared in advance as the response.

In step S4009, the OS 313 starts installing the local printer driver 311 based on the device identification information, a printer name, and the configuration information of the printer selected by the user. In this example, the selected printer is a virtual printer provided by the cloud printing system 102, the device identification information thereof is the HWID received in step S4006, and the configuration information is the configuration information received in step S4008. The local printer driver 311 to be installed may be provided as standard by the OS 313, and may be any printer driver suited to the printer 104, e.g., that is dependent on the printer vendor. If such a printer driver is not available, the printer driver may be a general-purpose printer driver not dependent on the vendor.

In step S4009, the OS 313 first generates a print queue of the local printer driver 311 having basic device capability information included in the OS 313. "Device capability information" refers to definition information required to generate print settings capability information of the printer driver, e.g., information written in XML, such as PrintDeviceCapabilites. The OS 313 then updates the device capability information constituting the local printer driver 311 using the configuration information (i.e., the capability information) obtained from the cloud printing service 321 of the cloud printing system 102. Through this, the installation of the selected printer, i.e., the local printer driver 311 corresponding to the IPP cloud server (or the virtual printer provided thereby) in this example, is completed.

The OS 313 is then associated with the virtual printer, and starts processing for installing an application that extends the local printer driver 311 (i.e., the print settings extension app 312). The descriptions from here will refer to Fig. 4B. First, the OS 313 performs processing for adding identification addition information to the device identification information. This is processing necessary when obtaining an extended setup information file (also called "Exinf") for the online support service 351 of the online support server 105, and may be any text string different from the normal device identification information. The device identification information to which the identification addition information has been added is also referred to as "extended device identification information".

In step S4010, the OS 313 transmits a request to search for an extended setup information file including the extended device identification information or associated with the extended device identification information to the online support service 351 along with the extended device identification information. If the device identification information of the printer 104 to which the identification addition information has not been added has been transmitted, a setup information file including the device identification information is returned as the search result, or no search result is found. In this case, a vendor-supplied printer driver of the printer 104 included in the returned setup information file is installed. Furthermore, because the device identification information does not include the identification addition information, the extended setup information file cannot be identified, and an application ID of the print settings extension app 312 included therein cannot be extracted.

On the other hand, by using the extended device identification information to which the identification addition information has been added, the extended setup information file in question can be identified, and the application ID of the print settings extension app 312 can be extracted therefrom.

The online support service 351 that has received the request to search for the extended setup information file determines whether the extended setup information file including the extended device identification information in question is held. In step S4011, if the extended setup information file including the device identification information received along with the Exinf search request is held, the online support service 351 returns the extended setup information file to the OS 313.

In step S4012, the OS 313 that has received the extended setup information file writes the content thereof to the registry. At the same time, the OS 313 installs extended setup information based on the obtained extended setup information file. In step S4013, the OS 313 extracts the application ID from the installed extended setup information.

On the other hand, if the extended setup information file including the device identification information received along with the Exinf search request is not held, the online support service 351 does not return a response. In this case, in step S4014, in response to a timeout or the like, the OS 313 stops the application installation process with the installation of the local printer driver remaining complete. Instead of a timeout, the online support service 351 may return a response indicating that no corresponding extended setup information file is present, and the OS 313 of the client terminal 101 may stop the processing in response thereto.

In step S4015, the OS 313 makes a request, to the application management service 331, for an application matching the extracted application ID. To that end, the application ID may be transmitted along with the request for the application, for example. In response to the request, the application management service 331 determines whether a program matching the requested application ID, e.g., the print settings extension app 312, is held. If such a program is held, in step S4016, the application management service 331 transmits the print settings extension app 312 matching the requested application ID to the client terminal 101 as a response.

In step S4017, the OS 313 installs the obtained print settings extension app 312 in association with the client-side print queue. Specifically, the application ID is saved as the information of the print queue in the registry of the OS 313 as a result of the print settings extension app 312 being installed, for example. When the generated print queue is called, the OS 313 launches the installed print settings extension app 312 using this information. Because the print queue is associated with the printer driver, the association with the print queue can also be called the association with the printer driver.

On the other hand, if a print settings extension app matching the application ID requested by the application management service 331 is not held, no response is made, and a timeout occurs. As a result, in step S4018, the OS 313 stops processing for installing the application, with the installation of the local printer driver remaining complete. At this time, the application management service 331 may return a response indicating that no corresponding extension application is present, and the OS 313 of the client terminal 101 may stop the processing in response thereto.

### Example of Printer Addition Wizard

Figs. 5, 6, and 7 are examples of the printer addition wizard start window when the user manually adds a printer according to the present embodiment, particularly in step S4001 of Fig. 4. Although a window commonly used in Windows OSs is used in the present embodiment, the window is not limited thereto. A window 501 for adding a printer manually can use a variety of methods for the addition, from a method of "search for a slightly older printer" to a method of "add a local printer or a network printer with manual settings". The present embodiment describes a method of "add a printer using an IP address or host name" among those methods. This is as described with reference to Fig. 4.

### Procedure when Executing Printing

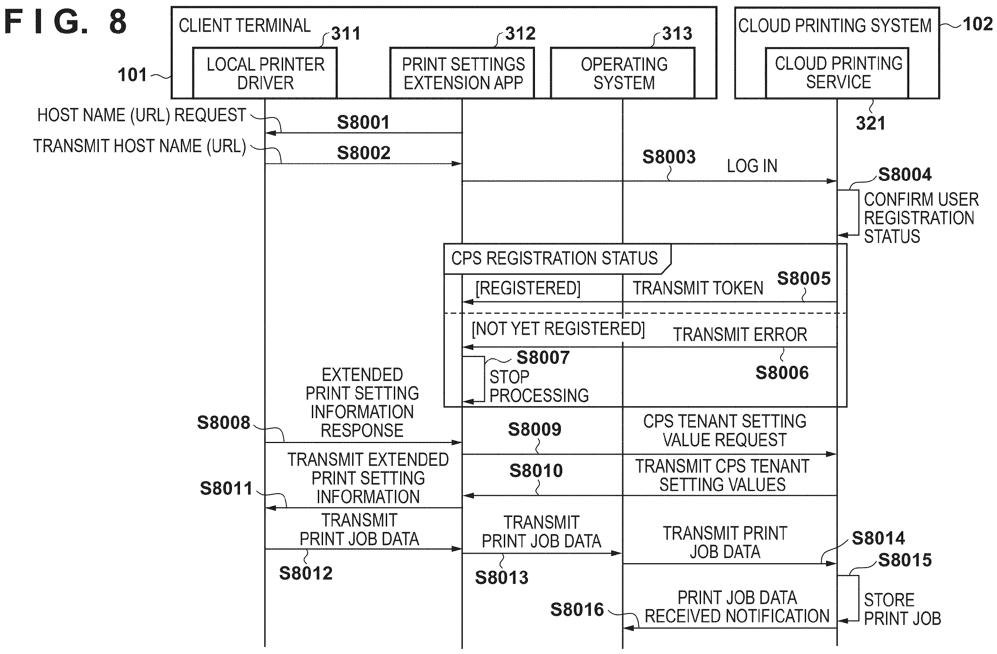

A procedure by which the user uploads print data to the cloud printing system, and a sequence performed between each item of software and the printing service, according to the present embodiment, will be described next with reference to Fig. 8.

In the procedure illustrated in Fig. 8, steps S8001 to S8007 are processes performed when the print settings extension app 312 is installed in the client terminal 101 for the first time. However, if the user is associated with the client terminal and a different user may use the terminal, this procedure may be executed from step S8003 each time the user logs in. The processing from step S8008 on can be executed once the processing from step S8005 has been executed. Accordingly, if the print settings extension app 312 holds a tenant URL of the cloud printing service 321 after performing this procedure once, the procedure of steps S8001 to S8007 may be skipped. In addition, as in Figs. 4A and 4B, in Fig. 8, the processing by the client terminal 101 and the cloud printing system 102 is performed by the CPUs thereof executing programs. Furthermore, the processing from step S8008 on may be started, for example, when printing processing is selected, and the print settings are called, in response to a user operation from an application or the like running on the client terminal 101.

In step S8001, the print settings extension app 312 makes a request for the IP address or host name (URL) of the cloud printing service 321 to the local printer driver 311 installed in the client terminal 101. "IP address or host name (URL)" refers to the IP address designated as the port to which the local printer driver 311 is connected. The IP address or host name (URL) can also be referred to as a "destination".

In step S8002, the local printer driver 311 transmits the host name or IP address of the cloud printing-compatible printer 104 held by (or associated with) the printer driver itself. The value set in the host name or IP address 603 in Fig. 7 may be transmitted here. In step S8003, the print settings extension app 312 transmits a login request to the cloud printing service 321 along with the identification information of the user, using the host name (URL) received in step S8002. Here, the identification information of the user may be the identification information of the user who logged in to the client terminal 101 and performed the operation for making the print instruction.

In step S8004, the cloud printing service 321 confirms the registration status of the user who made the login request. If the user is confirmed to be registered with the cloud printing service 321, in step S8005, the cloud printing service 321 issues a token to the print settings extension app 312, and transmits the issued token. However, if the user who requested the login cannot be confirmed to be registered with the cloud printing service 321, in step S8006, the cloud printing service 321 transmits error information to the print settings extension app 312. The print settings extension app 312 that receives the error in step S8006 stops the processing in step S8007. The processing performed thus far is the procedure performed when the print settings extension app 312 is installed for the first time.

The processing of steps S8008 and on is executed when the user attempts to execute printing using the local printer driver 311.

In step S8008, the local printer driver 311 makes a request to the print settings extension app 312 for information necessary for using the extended print settings (information for the extended print settings). After installation, the local printer driver 311 is automatically associated with the print settings extension app 312 by the OS 313. As such, a request can be transmitted from the local printer driver 311 to the print settings extension app 312 by calling an OS-standard API. This mechanism is provided by Windows (registered trademark), for example. Upon receiving the request in step S8008, the print settings extension app 312 makes a request to the cloud printing service 321 for setting values held by the tenant to which the logged-in user belongs, based on the token information obtained in step S8005. The setting values held by the tenant are mainly those set by the administrator of the tenant or the like, and include items such as print settings permitted to be used when printing via the cloud printing service 321. These setting values can also be called setting values for the print settings of the virtual printer provided by the cloud printing service 321. For example, these setting values permit only black-and-white printing for the user, prohibit color printing, recommend 2-in-1 printing, and the like.

In step S8010, the cloud printing service 321 transmits the setting values held by the tenant to which the logged-in user belongs to the print settings extension app 312. The setting values held by the tenant to which the logged-in user belongs may be setting values set for the tenant in advance. In step S8011, the print settings extension app 312 transmits the extended print settings information necessary for the extended print settings to the local printer driver 311 based on the setting values received in step S8010. This information includes, for example, a user interface window for making the print settings, print setting items that can be applied based on the setting values obtained in step S8010, and the like.

When, after applying the print settings, the user instructs the local printer driver 311 to execute the print, in step S8012, the local printer driver 311 transmits the print job data to the print settings extension app 312. At this time, a configuration may be used in which information capable of identifying the user who attempted to execute the print job, such as a username for logging in to the client terminal 101, is included and transmitted in association with the print job data.

In step S8013, the print settings extension app 312 transmits the print job data obtained in step S8012 to the OS 313. At this time, the print settings extension app 312 may convert the print job data to be transmitted into print data in a format supported by a printer of a specific vendor, and then transmit the print job data. Here, because the print settings extension app 312 is associated with the HWID provided by the cloud printing service 321, changing the HWID and the associated print settings extension app 312, for example, makes it possible to ensure compliance with that specific vendor.

In step S8014, the OS 313 transmits the obtained print job data to the cloud printing service 321.

In step S8015, after reception of the print job data in step S8014 is complete, the cloud printing service 321 stores the print job data in association with the account of the user set in step S8004. At this time, when the received print job data is in an intermediate data format such as a PDF file and the printer for output can be specified, the data may be converted to a PDL data format specific to that printer. In step S8016, the cloud printing service 321 transmits a notification to the print settings extension app 312 indicating that the reception of the print job data is complete. At this time, the print settings extension app 312 may display a notification window in the client terminal 101, indicating that the transmitting of the print job is complete.

Using the print settings extension app 312, print job data transmitted by the general-purpose local printer driver 311 through the procedure described above can be converted into print job data in a format supported by the cloud printing service 321. The print settings can also be converted (or limited, or expanded) to print settings supported by the cloud printing service 321.

### Procedure for Printing by Cloud-Compatible Printer

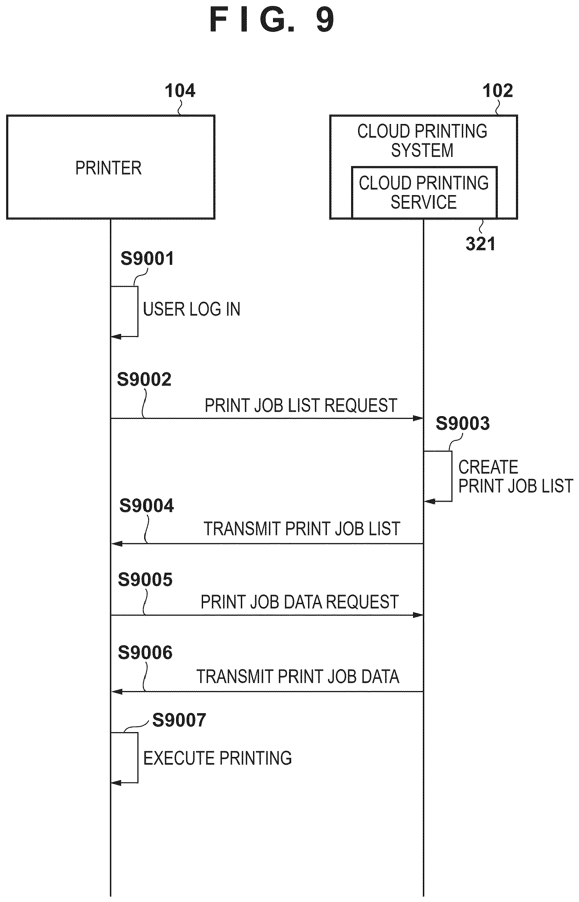

A procedure by which the user outputs print job data held in the cloud printing service from the cloud-compatible printer 104, and a sequence performed between the printer and the cloud printing service, according to the present embodiment, will be described next with reference to Fig. 9. The processing illustrated in Fig. 9 is realized by the CPU 232 of the printer 104 executing programs loaded into the memory 233.

In step S9001, the CPU 232 of the printer 104 accepts a login operation performed by a user who wishes to print using the cloud printing-compatible printer 104. Note that the printer to which the user logs in need not necessarily be the printer 104, and may be any printer registered with the tenant of the cloud printing service 321. In step S9002, the CPU 232 of the cloud printing-compatible printer 104 makes a request to the cloud printing service 321 for a list of print jobs associated with the logged-in user. To that end, for example, user identification information (a user ID) of the logged-in user may be transmitted to the cloud printing service 321 along with the request for the list.

In step S9003, the cloud printing service 321 generates a list of print jobs associated with the user logged in in step S9001. At this time, if the user identification information has been transmitted in step S8013, for example, jobs associated with the user may be searched for based on that user identification information. In step S9004, the cloud printing service 321 transmits the list of print jobs generated in step S9003 to the cloud printing-compatible printer 104.

The printer 104 displays the received list of print jobs on the display unit 236. When the user selects a job to be printed from the displayed job list and instructs the printing to be executed, in step S9005, the CPU 232 of the cloud printing-compatible printer 104 makes a request to the cloud printing service 321 to transmit the selected print job data.

In step S9006, the cloud printing service 321 transmits the print job data requested in step S9005 to the cloud printing-compatible printer 104.

In step S9007, the CPU 232 of the cloud printing-compatible printer 104 performs output processing, i.e., printing, of the print job data received in step S9006.

Through the procedure described above, of print job data held by the cloud printing service 321, print job data of a user logged in to the printer can be downloaded to the printer. The print job can then be executed, and the print job data can be printed.

### Effects of Present Embodiment

According to the present embodiment, a general-purpose local printer driver that transmits a print job to a vendor-specific cloud printing service can be installed in accordance with a standard installation method provided by an OS. A print settings extension app capable of communicating with the vendor-specific cloud printing service can also be installed. Then, when transmitting a print job from the general-purpose printer driver provided by the OS to the cloud printing service, a print job compliant with the cloud printing service can be transmitted via the print settings extension app. Here, the "print job compliant with the cloud printing service" is a print job in which the data format, the print settings, and the like are compatible with the data format, the print settings, and the like supported by the cloud printing service to which the print job is to be transmitted, a printer using that cloud printing service, and the like.

### Effects of Present Disclosure

According to the present disclosure, a print job can be uploaded to a cloud printing service even when printing using a local printer driver. Furthermore, a print job suited to a vendor-specific cloud printing service can be created.

This makes it possible to output a printed material suited to the cloud printing service from any multifunction peripheral registered with the cloud printing service.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing apparatus connected over a communication network to a printer and a cloud printing service holding a print job received, the information processing apparatus comprising:
obtainment means for obtaining, from the cloud printing service, first device identification information for linking with the cloud printing service; and
installation means for installing a program that transmits, to the cloud printing service, a print job output by a printer driver corresponding to the printer, based on the first device identification information.

2. The information processing apparatus according to claim 1,
wherein the first device identification information is information obtained from the cloud printing service by an operating system of the information processing apparatus based on information for accessing the cloud printing service input via a window provided by the operating system when installing the printer driver.

3. The information processing apparatus according to claim 1 or 2,
wherein the obtainment means further obtains a printer name from the cloud printing service, and
the installation means further installs a printer driver corresponding to the first device identification information and the printer name as the printer driver corresponding to the printer, and associating the program with the printer driver.

4. The information processing apparatus according to any one of claims 1 to 3,
wherein the installation means obtains information associated with the first device identification information from a first server, obtains a program corresponding to program identification information included in the obtained information from a second server, and installs the program.

5. The information processing apparatus according to claim 4,
wherein by the installation means, the program is not installed in a case where the information associated with the first device identification information is not obtainable from the first server.

6. The information processing apparatus according to any one of claims 1 to 5, further includes execution means for executing the program, receiving a print job output from the printer driver by the executed program, and transmitting the received print job to the cloud printing service.

7. The information processing apparatus according to claim 6,
wherein the program obtains a print setting from the cloud printing service, and transmits, to the cloud printing service, a print setting that is based on the print setting obtained from the cloud printing service, as a print setting of the print job.

8. The information processing apparatus according to any one of claims 1 to 7,
wherein the printer driver is a general-purpose printer driver provided by an operating system of the information processing apparatus.

9. A program that, when loaded and executed by a computer, causes the computer to execute processing, the processing comprising:
obtaining, from a cloud printing service, first device identification information for linking with the cloud printing service; and
installing a program that transmits, to the cloud printing service, a print job output by a printer driver corresponding to a printer, based on the first device identification information.

10. A method for installing a program in an information processing apparatus connected over a communication network to a printer and a cloud printing service holding a print job received from another information processing apparatus, the method comprising:
obtaining first device identification information for linking with a cloud printing service, from the cloud printing service; and
installing a program that transmits, to the cloud printing service, a print job output by a printer driver corresponding to the printer, based on the first device identification information.
